# EUROPÄISCHE PATENTSCHRIFT

(11) **EP 3 655 228 B1**
(45) Veröffentlichungstag und Bekanntmachung des Hinweises auf die Patenterteilung: **24.11.2021**
(21) Anmeldenummer: 18720245.2
(22) Anmeldetag: 26.04.2018
(51) Int. Cl.: B29B 7/28, B29B 7/84, B29B 7/22, B29B 7/18, B29B 7/74, B29C 48/76, B29C 48/96, G08B 21/14, B29C 48/92

(54) **VERFAHREN ZUR HERSTELLUNG EINER KAUTSCHUKMISCHUNG**
METHOD FOR PRODUCING A RUBBER MIXTURE
PROCÉDÉ DE PRODUCTION D'UN MÉLANGE DE CAOUTCHOUC

(30) Priorität: 19.07.2017 DE 102017212387
(43) Veröffentlichungstag der Anmeldung: 27.05.2020
(73) Patentinhaber: Continental Reifen Deutschland GmbH, 30165 Hannover (DE)
(72) Erfinder: WORTMANN, Christopher, 30851 Langenhagen (DE); STEINER, Frank Stefan, 30167 Hannover (DE)
(74) Vertreter: Continental Corporation
(86) Internationale Anmeldenummer: PCT/EP2018/060657
(87) Internationale Veröffentlichungsnummer: WO 2019/015819

(56) Entgegenhaltungen:
- EP-A1- 0 618 054
- EP-A1- 1 213 110
- DE-A1- 2 456 398
- DE-C1- 4 027 261
- JP-A- H11 300 811
- JP-A- 2006 123 272
- US-A1- 2014 016 428

## Beschreibung

Die Erfindung betrifft ein Verfahren zur Herstellung einer Kautschukmischung in einer Mischvorrichtung mit zumindest einer Mischkammer, in welcher Rotoren angeordnet sind, wobei eine Anlagensteuerung vorgesehen ist, mittels welcher Verfahrensparameter, zu welchen insbesondere die Drehzahl der Rotoren, die Absaugleistung einer Absaugeinrichtung und die Mischzeit gehören, gesteuert bzw. geregelt werden,
wobei in der Mischkammer zumindest ein Kautschuk mit zumindest einem Füllstoff, insbesondere Kieselsäure, vorzugsweise unter Zugabe von zumindest einem Kupplungsagenz, insbesondere einem Silan, gemischt wird und
wobei das in und oberhalb der Mischkammer befindliche Gasgemisch mittels der Absaugeinrichtung abgesaugt wird.

Es ist bekannt, in Kautschukmischungen als Füllstoff Kieselsäure (Silica) zu verwenden. In der Reifenindustrie besitzen kieselsäurehaltige Kautschukmischungen aufgrund ihrer Anwendung in modernen Fahrzeugluftreifen eine herausragende Bedeutung. Bei der Herstellung solcher Kautschukmischungen ist zu üblich, zur Verbesserung der Verarbeitbarkeit der Kautschukmischungen und zur Anbindung der polaren Kieselsäure an unpolare Kautschuke sogenannte Kupplungsagenzien einzusetzen, welche mit den polaren Gruppen der Kieselsäure reagieren und die Anbindung an den Kautschuk ermöglichen. Solche Kupplungsagenzien sind insbesondere bifunktionelle Organosilane, die am Siliciumatom mindestens eine Alkoxy-, Cycloalkoxy- oder Phenoxygruppe als Abgangsgruppe besitzen und die als weitere Funktionalität eine Gruppe aufweisen, die gegebenenfalls nach Spaltung eine chemische Reaktion mit den Doppelbindungen des Kautschuks eingehen kann. Bei diesen Kupplungsreaktionen werden insbesondere Alkohole, beispielsweise Ethanol, in beträchtlichen Mengen abgespalten und treten auf Grund der hohen Mischtemperaturen im Bereich von 120° bis 170° gasförmig aus dem Mischgut während des Mischvorganges aus. Diese gasförmigen Alkohole können sich an der Luft leicht entzünden, verpuffen oder explodieren, sodass es erforderlich ist, die Menge an freiwerdenden alkoholischen Gasen zu überwachen und gegebenenfalls in den Mischvorgang einzugreifen. Bisher ist es üblich, die Menge an freigesetzten gasförmigen Alkoholen stichprobenartig zu überprüfen. Derartig Stichproben werden hauptsächlich bei Kautschukmischungen, bei denen eine Freisetzung größerer Mengen an alkoholischen Gasen erwartet wird, durchgeführt. Mittels Absaugeinrichtungen werden die freiwerdenden alkoholischen Gase aus der Mischvorrichtung abgesaugt.

Aus der EP 1 213 110 A1 ist ein Verfahren zur Herstellung einer Kieselsäure und ein Silan enthaltenden Kautschukmischung bekannt. Das Verfahren wird in zwei Stufen in unterschiedlichen Mischkammern durchgeführt. In der ersten Mischkammer werden die Mischungsbestandteile, mit Ausnahme der Vulkanisationsbestandteile, vermischt und anschließend in die zweite Mischkammer überführt, in welcher die Kautschukmischung bei einer Temperatur von 130°C bis 180°C weitergemischt wird, sodass die Kieselsäure mit dem Silan reagiert. Bevorzugter Weise ist im Bereich zwischen den beiden Mischkammern eine Absaugeinrichtung angebracht, welche die bei der Reaktion der Kieselsäure mit dem Silan entstehenden Gase aus der zweiten Mischkammer absaugt. Diese Maßnahme trägt dazu bei, dass sich die Mischzeiten in der zweiten Mischkammer verkürzen und dass die Qualität der Kautschukmischung verbessert wird.

Da Kieselsäuren den aus den Kautschukmischungen gefertigten Gummimaterialien, beispielsweise Laufstreifen von Fahrzeugluftreifen, vorteilhafte Eigenschaften verleihen, bei Laufstreifen insbesondere hinsichtlich einer Vermeidung des Zielkonfliktes zwischen Rollwiderstand und Nassgriff sowie wegen der erzielbaren höheren Abriebbeständigkeit, besteht die Tendenz, Kautschukmischungen mit immer größeren Anteilen an Kieselsäure zu füllen. Eine Kieselsäure enthaltende Kautschukmischung mit verbessertem Rollwiederstand ist beispielsweise in der EP 2 345 696 A1 erwähnt.

Die bei der Silanisierung freigesetzten Mengen an alkoholischen Gasen sind bereits jetzt beträchtlich, sodass die Absaugeinrichtungen aus sicherheitsrelevanten Gründen mit leistungsstarken Absaugungen betrieben werden. Der Energiebedarf zur Absaugung ist daher enorm.

Weitere flüchtige organische Verbindungen, welche beim Mischen von Kautschukmischungen, insbesondere beim Mischen von Kautschukmischungen mit verstärkenden Füllstoffen und Kupplungsagenzien oder mit Harzen, häufig frei werden, sind beispielsweise Ester, Ether und brennbare Kohlenwasserstoffe.

Der Erfindung liegt die Aufgabe zu Grunde, ein Verfahren der eingangs genannten Art auf eine sicherere und energieeffizientere Weise als bisher durchzuführen.

Die gestellte Aufgabe wird erfindungsgemäß gelöst mit einem Verfahren gemäss Anspruch 1, bei welchem in der Absaugeinrichtung im angesaugten Gasgemisch befindliche flüchtige organische Verbindungen, insbesondere alkoholische Gase, kontinuierlich detektiert werden, wobei beim Überschreiten einer als Regelgrenzwert definierten Konzentration an organischen

Verbindungen im angesaugten Gasgemisch die gemessene Konzentration in der Anlagensteuerung als Regelgröße zur Regelung von zumindest einem der Verfahrensparameter herangezogen wird, wobei beim Überschreiten einer als Sicherheitsgrenzwert definierten Konzentration an organischen Verbindungen im angesaugten Gasgemisch mittels der Anlagensteuerung eine Sicherheitsabschaltung der Mischvorrichtung erfolgt.

Gemäß der Erfindung wird daher die Konzentration flüchtiger organischer Verbindungen im angesaugten Gasgemisch fortlaufend gemessen und zuverlässig überwacht. Überschreitet die gemessene Konzentration einen Regelgrenzwert, wird die ermittelte Konzentration als Regelgröße für zumindest einen Verfahrensparameter herangezogen. Der Regeleingriff kann dabei auch während des Mischens einer Charge erfolgen. Durch diese automatisierten Eingriffe in das Verfahren bzw. den Verfahrensablauf ist eine Regelung des Verfahrens in Echtzeit möglich. Überschreitet die gemessene Konzentration den Sicherheitsgrenzwert erfolgt eine Sicherheitsabschaltung der Mischvorrichtung, sodass eine Anreicherung von potenziell gefährlichen, insbesondere entflammbaren, Gasgemischen verhindert wird.

Gemäß einer bevorzugten Ausführungsvariante ist ein Verfahrensparamater, welcher geregelt wird, die Absaugleistung der Absaugeinrichtung. Diese Maßnahme ermöglicht eine sehr energieeffiziente Absaugung bei geringer Konzentration an flüchtigen organischen Verbindungen bzw. bei Abwesenheit von flüchtigen organischen Verbindungen im angesaugten Gasgemisch. Insbesondere sind die Mengen an entstehenden flüchtigen organischen Verbindungen in verschiedenen Kautschukmischungen sehr unterschiedlich. Die gebildete Menge an flüchtigen organischen Verbindungen schwankt auch während des Mischens einer Kautschukmischung. Beispielsweise entstehen zu Beginn eines Mischvorganges tendenziell weniger oder keine dieser Verbindungen, da das Mischgut noch "kalt" ist und noch keine Reaktionen, beispielsweise eine Silianisierung, stattfindet. Eine geringe Absaugleistung ist daher in diesem Verfahrensstadium ausreichend. Die Regelung der Absaugleistung ist auch deshalb besonders vorteilhaft, weil sie den Ablauf der eigentlichen Mischungsherstellung nicht beeinflusst, sodass auch weiterhin ein sehr hoher Durchsatz möglich ist. Durch Erhöhen der Absaugleistung werden die potenziell gefährlichen Gase schnell aus der Vorrichtung abtransportiert, sodass ein Anreichern dieser Gase innerhalb der Mischvorrichtung nahezu ausgeschlossen ist.

Gemäß einer weiteren bevorzugten alternativen Ausführungsvariante wird mittels zumindest einer elektronisch ansteuerbaren, in ein Abluftrohr der Absaugeinrichtung einschiebbaren Klappe der Volumenstrom der Absaugeinrichtung geregelt. Diese Variante ist dann bevorzugt, wenn mehrere Absaugeinrichtungen mittels einer gemeinsamen Absaugung betrieben werden. Der Querschnitt des betroffenen Abluftrohres wird durch Einschieben der Klappe verringert, sodass die Saugleistung der Absaugung auf die weiteren Absaugeinrichtungen konzentriert wird.

Gemäß einer weiteren bevorzugten Ausführungsvariante ist ein Verfahrensparamater, welcher geregelt wird, die Mischzeit. Sobald keine oder kaum mehr organische Verbindungen in den Absaugeinrichtungen registriert werden, wird die Kautschukmischung, ggf. unter Zugabe weiterer Mischungskomponenten, entsprechend fertiggemischt. Durch das Regeln der Mischzeit in Abhängigkeit von der gemessenen Konzentration an flüchtigen organischen Verbindungen läuft das Mischverfahren daher besonders effektiv ab, der Durchsatz ist besonders hoch und der Energieaufwand sowie die Mischzeit sind auf die jeweilige Kautschukmischung abgestimmt.

Bei einer weiteren bevorzugten Ausführung ist ein Verfahrensparameter, welcher geregelt wird, die Drehzahl der in der Mischkammer befindlichen Rotoren. Die Drehzahl der Rotoren steuert unmittelbar den Energieeintrag in das Mischgut und damit die Mischtemperatur. Sind die gemessenen Konzentrationen an flüchtigen organischen Verbindungen gering, kann die Drehzahl erhöht werden, sodass der Mischvorgang beschleunigt und der Durchsatz erhöht wird.

Bevorzugter Weise ist vorgesehen, dass die Drehzahl der in der Mischkammer befindlichen Rotoren beim Überschreiten des Regelgrenzwertes reduziert wird, insbesondere die Rotoren kurzzeitig angehalten werden. Der Energieeintrag in das Mischgut wird dadurch verringert und die flüchtigen organischen Verbindungen werden langsamer freigesetzt.

Weitere bevorzugte Varianten des Verfahrens betreffen die Sicherheitsabschaltung der Mischvorrichtung.

Gemäß einer bevorzugten Ausführungsvariante wird bei der Sicherheitsabschaltung die Absaugleistung der Absaugeinrichtung maximiert. Die im angesaugten Gasgemisch befindlichen flüchtigen organischen Verbindungen werden derart besonders schnell abtransportiert.

Gemäß einer weiteren bevorzugten Ausführung werden bei der Sicherheitsabschaltung sämtliche Rotoren gestoppt. Der Energieeintrag in die Kautschukmischung wird schlagartig beendet. Dies wirkt einem weiteren Erhitzen der Kautschukmischung und der damit verbundenen Entstehung von flüchtigen organischen Verbindungen wirkungsvoll entgegen.

Umfasst die für das Verfahren eingesetzte Mischvorrichtung einen Stempel, ist es von Vorteil, wenn bei der Sicherheitsabschaltung der Stempel heruntergefahren wird. Dies bewirkt eine schnelle Druckerhöhung in der Mischkammer und wirkt daher dem Austritt der flüchtigen organischen Verbindungen entgegen bzw. verzögert den Austritt der flüchtigen organischen Verbindungen. Auch wenn sich die Gase entzünden, befindet sich die möglicherweise abbrennende Kautschukmischung in der Mischkammer, in welcher das Feuer schnell wieder ausgeht, da in die Mischkammer durch den heruntergefahrenen Stempel kaum Sauerstoff gelangt.

Umfasst die Mischvorrichtung einen eine Fütteröffhung aufweisenden Schacht, ist es von Vorteil, wenn bei der Sicherheitsabschaltung die Fütteröffhung verschlossen und vorzugsweise verriegelt wird. Dies reduziert zusätzlich die Sauerstoffzufuhr.

Umfasst die Mischvorrichtung ein Ausformaggregat, ist es von Vorteil, wenn bei der Sicherheitsabschaltung das Ausformaggregat angehalten wird. Dadurch wird verhindert, dass eine etwaige brandgefährdete Kautschukmischung ausgeformt wird und zusätzliche flüchtigen organischen Verbindungen austreten.

Bevorzugter Weise wird bzw. werden beim Überschreiten des Regelgrenzwertes und/oder beim Überschreiten des Sicherheitsgrenzwertes in die Absaugeinrichtung Luft, Kohlenstoffdioxid und/oder Stickstoff eingeströmt. Das jeweils angesaugte Gasgemisch wird dadurch schlagartig verdünnt. Diese Variante ist beispielsweise bevorzugt, wenn der Regelgrenzwert ein "Umweltschutzgrenzwert" ist. Ein Einströmen von Kohlenstoffdioxid und/oder Stickstoff ist vor allem beim Überschreiten des Sicherheitsgrenzwertes von Vorteil, da diese Gase die Verbrennung nicht fördern.

Ferner ist es von Vorteil, wenn beim Überschreiten des Regelgrenzwertes und/oder beim Überschreiten des Sicherheitsgrenzwertes in die Absaugeinrichtung Wasser eingesprüht wird. Das angesaugte Gasgemisch wird dadurch ebenfalls schlagartig verdünnt und zusätzlich gleichzeitig effektiv abgekühlt.

Gemäß einer weiteren bevorzugten Ausführungsvariante wird die Konzentration an organischen Verbindungen im angesaugten Gasgemisch mittels eines Flammenionisationsdetektors, eins Wärmetönungssensors, eins Halbleiterdetektors, eines Photoionisationsdetektors oder eins Infrarotdetektors gemessen. Flammenionisationsdetektor, Halbleiterdetektor und Wärmetönungssensor messen unspezifisch, detektieren also das gesamte Spektrum an flüchtigen organischen Verbindungen, und liefern somit eine Gesamtkonzentration flüchtiger organischer Verbindungen. Mittels Infrarotdetektoren sind bekannter Weise einzelne Gase spezifisch quantifizierbar, sodass Infrarotdetektoren insbesondre dann bevorzugt sind, wenn die entstehenden flüchtigen organischen Verbindungen bekannt sind, beispielsweise beim Mischvorgang von Kautschukmischungen, bei welchen eine Silanisierung durchgeführt wird. Wärmetönungssensoren sind vorteilhafterweise besonders einfach betreibbar und die Absaugeinrichtungen integrierbar.

Gemäß einer weiteren bevorzugten Ausführungsvariante wird mittels eines in der Absaugeinrichtung angeordneten Volumenstrommessgerätes der Volumenstrom der angesaugten Luft gemessen, wobei der Volumenstrom in die Regelung der/des Verfahrensparameter(s), insbesondere der Absaugleistung der Absaugeinrichtung, einfließt. Insbesondere wird mit dem Volumenstrommessgerät bestimmt, ob ein bestimmter Minimalwert für die Strömungsgeschwindigkeit des angesaugten Gasgemisches in der Absaugeinrichtung nicht unterschritten wird. Dadurch ist gewährleitet, dass sich keine feinen Stäube, beispielsweise von Füllstoffen stammende Stäube, in den Absaugeinrichtungen ansammeln. Im normalen Betrieb erfolgt insbesondere eine Regelung, welche ein besonders geräuscharmes Betreiben der Absaugeinrichtung ermöglicht. Der Volumenstrom regelt sich daher gewissermaßen selbst bzw. wird mit dem Volumenstrommessgerät kontrolliert und über die Absaugleistung der Absaugeinrichtungen angepasst.

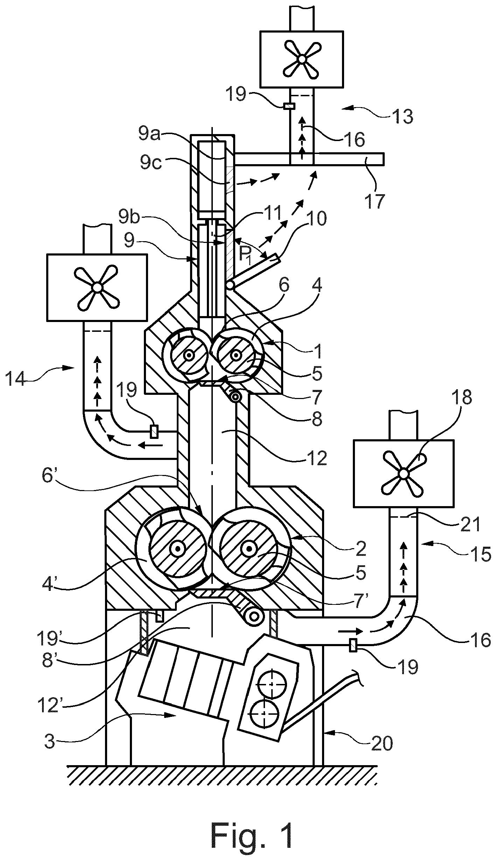

Weitere Merkmale, Vorteile und Einzelheiten der Erfindung werden nun anhand der einzigen Figur, der Fig. 1, welche eine vereinfachte schematische Darstellung einer Vorrichtung zur Herstellung einer Kautschukmischung zeigt, näher beschrieben.

Die in Fig. 1 gezeigte Vorrichtung umfasst einen Tandemmischer, welcher eine Obermaschine 1 und eine Untermaschine 2 aufweist. Unterhalb des Tandemmischers ist in einer Kammer 20 ein Ausformaggregat 3, beispielsweise ein Walzwerk oder ein Rollerhead-Extruder, angeordnet. Eine nicht dargestellte und nicht Gegenstand der Erfindung bildende Anlagensteuerung steuert und regelt bestimmte Misch- bzw. Verfahrensparameter während des Mischvorganges.

Die Obermaschine 1 weist eine obere Mischkammer 4, die Untermaschine 2 weist eine untere Mischkammer 4' auf, wobei in jeder Mischkammer 4, 4' zwei in an sich bekannter Weise ausgeführte Rotoren 5 angeordnet sind. Jede Mischkammer 4, 4' weist oberhalb der jeweiligen Rotoren 5 eine Einfüllöffnung 6, 6' und unterhalb der Rotoren 5 eine der jeweiligen Einfüllöffnung 6, 6' gegenüberliegende Auswurföffnung 7, 7' auf. Unterhalb der jeweiligen Mischkammer 4, 4' ist ein schwenkbarer Sattel 8, 8' angeordnet, mittels welchem die Auswurföffnung 7, 7' geöffnet und verschlossen werden kann.

In die Einfüllöffnung 6 der oberen Mischkammer 4 mündet ein Schacht 9 mit Schachtwänden 9a. In einer Schachtwand 9a ist seitlich eine Fütteröffnung 9b und oberhalb der Fütteröffnung 9b und Abluftöffnung 9c ausgebildet. Mittels einer schwenkbaren Beladeklappe 10 ist die Fütteröffnung 9b, wie durch den Pfeil Pi angedeutet, verschließbar.

Innerhalb des Schachtes 9 befindet sich ein druckbeaufschlagter, auf- und abbewegbarer Stempel 11. Bei nach oben bewegtem Stempel 11 und geöffneter Fütteröffhung 9b sind über die Fütteröffnung 9b Mischungsbestandteile in die obere Mischkammer 4 aufgebbar. Mittels des Stempels 11 kann in der oberen Mischkammer 4 befindliches Mischgut zu den dort befindlichen Rotoren 5 gedrückt werden.

Zwischen der Auswurföffnung 7 der oberen Mischkammer 4 und der Einfüllöffnung 6 der unteren Mischkammer 4' verläuft ein Übergabeschacht 12, durch welchen nach Öffnen der Auswurföffnung 7 der oberen Mischkammer 4 das Mischgut von der oberen Mischkammer 4 in die untere Mischkammer 4' überführbar ist. Unterhalb der Auswurföffhung 7' der unteren Mischkammer 4' verläuft ein Übergabeschacht 12' zum Ausformaggregat 3. Durch Öffnen des Sattels 8' der unteren Mischkammer 4' wird das Mischgut auf das Ausformaggregat 3 aufgebracht und anschließend mittels diesem auf die gewünschte Dicke gewalzt. Die gewalzte Kautschukmischung wird über eine Spalt aus der Kammer 20 abtransportiert und je nach Einsatzzweck weiterverarbeitet, wobei die Kautschukmischung beispielsweise zur nachfolgenden Fertigung eines Laufstreifens eines Fahrzeugluftreifens in an sich bekannter Weise bahnförmig extrudiert wird.

Am Tandemmischer sind seitlich drei Absaugeinrichtungen 13, 14, 15 angeordnet. Jede Absaugeinrichtungen 13, 14, 15 weist eine aus mehreren Abluftrohren 16 zusammengesetzte Rohrleitung auf, welche beispielsweise auf ein Dach der jeweiligen Produktionshalle oder an eine sonstige geeignete Abgabestelle für die angesaugten Gase und Dämpfe führt. Die obere Absaugeinrichtung 13 befindet sich oberhalb der Abluftöffnung 9c und weist eine an die entsprechenden Schachtwand 9a angrenzende Absaughaube 17 auf. Die mittlere Absaugeinrichtung 14 ist am Übergabeschacht 12 angeschlossen. Die untere Absaugeinrichtung 15 ist knapp oberhalb des Ausformaggregates 3 am Übergabeschacht 12' angeschlossen.

Jede Absaugeinrichtung 13, 14, 15 weist beim gezeigten Ausführungsbeispiel ein eigenes Absaugelement, beim gezeigten Ausführungsbeispiel einen Ventilator 18, sowie einen dem Ventilator 18 vorgeschalteten Staubfilter 21 auf. Die Absaugeinrichtung 13 weist einen in dem an die Absaughaube 17 unmittelbar angeschlossenem Abluftrohr 16 positionierten Gassensor 19 zur kontinuierlichen Messung von flüchtigen organischen Verbindungen (VOCs) auf. Weitere Gassensoren 19 sind in dem an den Übergabeschacht 12 und in dem an den Übergabeschacht 12' jeweils unmittelbar angeschlossenem Abluftrohr 16 positioniert. Jeder Gassensor 19 ist insbesondere ein Flammenionisationsdetektor, ein Wärmetönungssensor, ein Halbleiterdetektor, ein Photoionisationsdetektor oder ein Infrarotdetektor. Flammenionisationsdetektor, Halbleiterdetektor und Wärmetönungssensor messen unspezifisch, detektieren also das gesamte Spektrum an flüchtigen organischen Verbindungen, und liefern somit eine Gesamtkonzentration flüchtiger organischer Verbindungen. Mittels Infrarotdetektoren sind bekannter Weise einzelne Gase spezifisch quantifizierbar, sodass Infrarotdetektoren insbesondere dann bevorzugt sind, wenn die entstehenden flüchtigen organischen Verbindungen bekannt sind, beispielsweise beim Mischvorgang von Kautschukmischungen, bei welchen eine Silanisierung durchgeführt wird. Wärmetönungssensoren sind vorteilhafterweise besonders einfach betreibbar und besonders einfach in die Absaugeinrichtungen integrierbar.

Wie in Fig. 1 durch mehrere Pfeile angedeutet ist, saugen die Absaugeinrichtungen 13, 14, 15 mittels der Ventilatoren 18 fortlaufend das entsprechende Gasgemisch an, sodass eine kontinuierliche und zuverlässige Messung der Gase im angesaugten Gasgemisch erfolgt. Die Leistung der Ventilatoren 18, die für eine kontinuierliche Messung des Gasgemisches mittels der Gassensoren 19 in Echtzeit erforderlich ist, ist gering, sodass auch der Energieaufwand gering ist.

Wird in dem Tandemmischer eine mit Silica (Kieselsäure) gefüllte sowie mit einem Silan versetzte Kautschukmischung gemischt, bilden sich in der Mischkammer 4, 4' bei den üblichen Mischtemperaturen von beispielsweise 140° bis 160° alkoholische Gase, welche aus der Kautschukmischung entweichen. Die Silanisierung kann dabei sowohl in der oberen Mischkammer 4 als auch in der unteren Mischkammer 4' durchgeführt werden. Mittels der Gassensoren 19 sind die im durch die jeweilige Absaugeinrichtung 13, 14, 15 angesaugten Gasgemisch befindlichen alkoholischen Gase detektierbar und deren Menge bzw. Konzentration im Gasgemisch messbar. Die mittels der Gassensoren 19 gemessene Konzentration an alkoholischen Gasen im angesaugten Gasgemisch, ist die sogenannte "Istkonzentration". Diese ist eine Regelgröße zur Regelung von Verfahrensparametern des Tandemmischers, wobei beim Überschreiten einer oder mehrerer als zulässig definierten Konzentration(en) an alkoholischen Gasen im Gasgemisch ein Regeleingriff erfolgt. Dabei definiert eine erste Konzentration an alkoholischen Gasen im Gasgemisch einen als Regelgrenzwert bezeichneten Grenzwert und eine zweite Konzentration an alkoholischen Gasen im Gasgemisch einen Sicherheitsgrenzwert bezeichneten Grenzwert. Wie nachfolgend erläutert wird, kann der Regeleingriff eine oder mehrere Verfahrensparameter betreffen sowie ferner eine Sicherheitsabschaltung der Vorrichtung bewirken.

Etwaige beim Mischen in der Obermaschine 1 freigesetzten alkoholischen Gase strömen am Stempel 11 vorbei, nachfolgend durch die Öffnung 9a, werden von der Absaugeinrichtung 13 abgesaugt, am dort befindlichen Gassensor 19 vorbeigeleitet und von diesem detektiert. Detektiert dieser Gassensor 19 eine über dem Regelgrenzwert liegende Istkonzentration an alkoholischen Gasen im angesaugten Gasgemisch erfolgt ein Regeleingriff, welcher beispielsweise die Drehzahl der Rotoren 5 betrifft. Die Drehzahl der Rotoren 5 wird verringert, wodurch der Energieeintrag der Rotoren 5 in das Mischgut und damit die Mischtemperatur (Temperatur in der Mischkammer) gesenkt werden, sodass die Silanisierung verlangsamt und die Konzentration an alkoholischen Gasen im Gasgemisch in der oberen Mischkammer 4 sinkt. Gegebenenfalls wird das Mischgut nach einem die Drehzahl der Rotoren 5 betreffenden Regeleingriff insgesamt länger gemischt, sodass weiterhin eine hohe Mischgüte erhalten bleibt, insbesondere die Silianisierung vollständig durchgeführt wird. Erforderlichenfalls können die Rotoren 5 in der oberen Mischkammer 4 auch angehalten werden.

Ein weiterer möglicher Regeleingriff betrifft die Absaugleistung der Absaugeinrichtung 13. Überschreitet die Istkonzentration an alkoholischen Gasen im Gasgemisch den Regelgrenzwert, wird die Drehzahl des entsprechenden Ventilators 18 erhöht, sodass das Gasgemisch, welches die gebildeten alkoholischen Gase enthält, schneller abgesaugt wird und die Konzentration an alkoholischen Gasen im Gasgemisch unter der Maximalkonzentration gehalten wird. Da dieser Regeleingriff vorteilhafter Weise keinen Mischparameter, wie beispielsweise die Drehzahl der Rotoren, betrifft, bleibt die Mischzeit zur Erzielung der gewünschten Mischgüte unverändert.

Sobald das Mischgut aus der Obermaschine 1 in die Untermaschine 2 überführt wurde, werden gegebenenfalls beim Mischvorgang in der Untermaschine 2 freiwerdende alkoholische Gase von der mittleren Absaugeinrichtung 14 angesaugt. Wird von dem dort positionierten Gassensor 19 eine über dem Regelgrenzwert liegende Istkonzentration an alkoholischen Gasen im Gasgemisch registriert, erfolgt ein die Drehzahl der Rotoren 5 in der unteren Mischkammer 4' und/oder ein die Drehzahl des Ventiltors 18 in der Absaugeinrichtung 14 betreffender Regeleingriff.

Bevorzugter Weise erfolgt die Regelung der Drehzahl der Rotoren 5 jeweils mittels eines PID-Reglers (proportional-integral-derivative controllers).

Sobald das Mischgut aus der Untermaschine 2 ausgeworfen wird, misst der Gassensor 19 im entsprechenden Abluftrohr 16 der unteren Absaugeinrichtung 15 die Konzentration an alkoholischen Gasen im angesaugten Gasgemisch. Wird eine über dem Regelgrenzwert liegend Konzentration vom Gassensor 19 gemessen, wird die Absaugleistung der Absaugeinrichtung 16 erhöht.

Beim gezeigten Ausführungsbeispiel ist ein weiterer Gassensor 19' knapp unterhalb der unteren Mischkammer 4' angeordnet. Misst der Gassensor 19' eine über dem Regelgrenzwert liegende Istkonzentration an alkoholischen Gasen im angesaugten Gasgemisch wird ebenfalls die Absaugleistung der Absaugeinrichtung 16 erhöht. Durch diese Maßnahmen wird eine etwaige Anreicherung an alkoholischen Gasen im Bereich unterhalb der unteren Mischkammer 4', beim gezeigten Ausführungsbeispiel im Bereich des Ausformaggregates 3, effektiv verhindert.

Bevorzugter Weise wird die Absaugleistung der Absaugeinrichtungen 13, 14, 15 derart geregelt, dass sie an die jeweils detektierte lokale Konzentration an alkoholischen Gasen im jeweils angesaugten Gasgemisch angepasst wird. Diese Maßnahmen senken besonders effektiv den Energieaufwand zum Betreiben der Vorrichtung. Gemäß einer alternativen Variante weisen sämtliche Absaugeinrichtung 13, 14, 15 oder zumindest zwei der Absaugeinrichtungen 13, 14, 15 ein gemeinsames zentrales Absaugelement auf.

Wird von einem der Gassensoren 19 oder, falls vorhanden, vom Gassensor 19' eine über dem erwähnten Sicherheitsgrenzwert liegende Konzentration an alkoholischen Gasen im angesaugten Gasgemisch registriert, erfolgt eine Sicherheitsabschaltung der Vorrichtung. Bei dieser werden sämtliche Rotoren 5 gestoppt, die Absaugleistung der Absaugeinrichtungen 13, 14, 15 maximiert, der Stempel 9 heruntergefahren und die Fütteröffnung 9b mit der Beladeklappe 10 verschlossen, welche optional zusätzlich gegen ein Öffnen verriegelt wird. Ferner kann zusätzlich vorgesehen sein, dass bei einer Sicherheitsabschaltung das Ausformaggregat 3 gestoppt wird, sodass eine Kautschukmischung, aus welcher entsprechend große Mengen an alkoholischen Gasen austreten, zumindest vorerst nicht ausgewalzt wird und die Kammer nicht verlässt. Solange die Kautschukmischung in der Kammer 20 verbleibt, können die alkoholischen Gase von der Absaugeinrichtung 15 schnell abgesaugt werden.

In den Absaugeinrichtungen 13, 14, 15 kann jeweils ein Volumenstrommessgerät angeordnet sein, welches den Volumenstrom des angesaugten Gasgemisches misst. Der gemessene Volumenstrom kann, neben der erwähnten Istkonzentration an alkoholischen Gasen im angesaugten Gasgemisch, eine weitere Regelgröße darstellen. Der Volumenstrom als Regelgröße regelt dabei die Absaugleistung der Absaugeinrichtungen, welche den geregelten Verfahrensparameter darstellt. Mit dem Volumenstrommessgerät wird bestimmt, ob ein bestimmter Minimalwert für die Strömungsgeschwindigkeit des angesaugten Gasgemisches nicht unterschritten wird. Dadurch ist gewährleistet, dass sich keine feinen Stäube, beispielsweise von Füllstoffen, in den Abluftrohren 16 und den Ventilatoren 18 sammeln. Ferner wird die Strömungsgeschwindigkeit derart geregelt, dass während des normalen Betriebes kein lautes Dröhnen oder Pfeifen verursacht wird. Der Volumenstrom regelt sich daher gewissermaßen selbst bzw. wird mit dem Volumenstrommessgerät kontrolliert und über die Absaugleistung der Absaugeinrichtungen angepasst. Bei einer etwaigen Sicherheitsabschaltung des Tandemmischers und einer damit verbundenen Maximierung der Saugleitung der Ventilatoren 18 ist ein etwaiges Dröhnen oder Pfeifen selbstverständlich nicht von Belang.

Ist ein einen Stempel aufweisenden Mischer vorgesehen, wie es beim gezeigten Ausführungsbeispiel bei der Obermaschine 1 der Fall ist, ist eine optionale oder zusätzliche Regelgröße die Stempelposition. Wird eine die Maximalkonzentration überschreitende Konzentration an alkoholischen Gasen im Gasgemisch detektiert, verbleibt der Stempel in seiner unteren Position oder wird heruntergefahren. Ferner kann vorgesehen sein, dass die Beladeklappe 10 automatisch verriegelt wird, sobald eine die Maximalkonzentration überschreitende Konzentration an alkoholischen Gasen im Gasgemisch detektiert wird.

Die Absaugeinrichtungen 13,14, 15 können ferner mit einer oder mehreren Nebenluftklappe(n), welche insbesondere jeweils eine Rückschlagvorrichtung aufweisen, versehen sein. Bei dieser Variante kann bzw. können in Abhängigkeit von der Konzentration an alkoholischen Gase die Nebenluftklappe(n) geöffnet und derart große Mengen an Frischluft in die Absaugeinrichtungen 13, 14, 15 einströmen. Auch dadurch kann die Konzentration an alkoholischen Gasen vorteilhafterweise schnell verringert werden. Dies ist insbesondere bei sehr hohen Konzentrationen an alkoholischen Gasen im angesaugten Gasgemisch und bei sehr schnell ansteigenden Konzentrationen an alkoholischen Gasen im angesaugten Gasgemisch von besonderem Vorteil.

Anstelle der Regelung der Absaugleistung der Ventilatoren (Regelgröße) ist es möglich, dass in den Rohrleitungen elektronisch ansteuerbare Klappen zur Volumenstromregelung vorgesehen sind.

Es kann ferner vorgesehen sein, dass anstelle von Frischluft über eine Zufuhr von Kohlenstoffdioxid und/oder Stickstoff über entsprechende an die Abluftrohre 16 angeschlossene Kohlenstoffdioxid- oder Stickstoffleitungen die Konzentration an alkoholischen Gasen im angesaugten Gasgemisch verringert wird. Diese Variante ist insbesondere deshalb vorteilhaft, da Kohlenstoffdioxid bzw. Stickstoff eine Verbrennung nicht fördern. Ein Zuleiten von Kohlenstoffdioxid- oder Stickstoff ist insbesondere bevorzugt, wenn die gemessene Konzentration an alkoholischen Gasen im angesaugten Gasgemisch über der jeweils zu erwartenden Explosionsgrenze liegt.

Gemäß einer weiteren Variante ist optional oder zusätzlich eine Sprühdüse zum Einsprühen von Wasser an zumindest eines der Abluftrohre 16 der Absaugeinrichtung 13, 14,15 angeschlossen.

Der Sicherheitsgrenzwert und der Regelgrenzwert beziehen sich grundsätzlich auf Konzentrationen flüchtiger organischer Verbindungen im entstehenden Gasgemisch.

### Bezugszeichenliste

- 1: Obermaschine
- 2: Untermaschine
- 3: Ausformaggregat
- 4: obere Mischkammer
- 4': untere Mischkammer
- 5: Rotoren
- 6, 6': Einfüllöffnung
- 7, 7: Auswurföffhung
- 8, 8': Sattel
- 9: Schacht
- 9a: Schachtwand
- 9b: Fütteröffhung
- 9c: Abluftöffnung
- 10: Beladeklappe
- 11: Stempel
- 12, 12': Übergabeschacht
- 13, 14, 15: Absaugeinrichtungen
- 16: Abluftrohr
- 17: Absaughaube
- 18: Ventilator
- 19, 19': Gassensor
- 20: Kammer
- 21: Staubfilter

## Patentansprüche

1. Verfahren zur Herstellung einer Kautschukmischung in einer Mischvorrichtung mit zumindest einer Mischkammer (4, 4'), in welcher Rotoren (5) angeordnet sind, wobei eine Anlagensteuerung vorgesehen ist, mittels welcher Verfahrensparameter, zu welchen insbesondere die Drehzahl der Rotoren (5), die Absaugleistung einer Absaugeinrichtung (13, 14, 15) und die Mischzeit gehören, gesteuert bzw. geregelt werden,
wobei in der Mischkammer (4, 4') zumindest ein Kautschuk mit zumindest einem Füllstoff, insbesondere Kieselsäure, vorzugsweise unter Zugabe von zumindest einem Kupplungsagenz, insbesondere einem Silan, gemischt wird und
wobei das in und oberhalb der Mischkammer (4, 4') befindliche Gasgemisch mittels der Absaugeinrichtung (13, 14, 15) abgesaugt wird,
**dadurch gekennzeichnet,**
**dass** in der Absaugeinrichtung (13, 14, 15) im angesaugten Gasgemisch befindliche flüchtige organische Verbindungen, insbesondere alkoholische Gase, kontinuierlich detektiert werden, wobei beim Überschreiten einer als Regelgrenzwert definierten Konzentration an organischen Verbindungen im angesaugten Gasgemisch die gemessene Konzentration in der Anlagensteuerung als Regelgröße zur Regelung von zumindest einem der Verfahrensparameter herangezogen wird, wobei beim Überschreiten einer als Sicherheitsgrenzwert definierten Konzentration an organischen Verbindungen im angesaugten Gasgemisch mittels der Anlagensteuerung eine Sicherheitsabschaltung der Mischvorrichtung erfolgt.

2. Verfahren nach Anspruch 1, **dadurch gekennzeichnet, dass** ein Verfahrensparamater, welcher geregelt wird, die Absaugleistung der Absaugeinrichtung (13, 14, 15) ist.

3. Verfahren nach Anspruch 1 oder 2, **dadurch gekennzeichnete, dass** mittels zumindest einer elektronisch ansteuerbaren, in ein Abluftrohr (16) der Absaugeinrichtung (13, 14, 15) einschiebbaren Klappe der Volumenstrom der Absaugeinrichtung (13, 14, 15) geregelt wird.

4. Verfahren nach einem der Ansprüche 1 bis 3, **dadurch gekennzeichnet, dass** ein Verfahrensparamater, welcher geregelt wird, die Mischzeit ist.

5. Verfahren nach einem der Ansprüche 1 bis 4, **dadurch gekennzeichnet, dass** ein Verfahrensparamater, welcher geregelt wird, die Drehzahl der in der Mischkammer (4, 4') befindlichen Rotoren (5) ist.

6. Verfahren nach Anspruch 5, **dadurch gekennzeichnet, dass** die Drehzahl der in der Mischkammer (4, 4') befindlichen Rotoren (5) beim Überschreiten des Regelgrenzwertes reduziert wird, wobei insbesondere die Rotoren (5) kurzzeitig angehalten werden.

7. Verfahren nach einem der Ansprüche 1 bis 6, **dadurch gekennzeichnet, dass** bei einer Sicherheitsabschaltung die Absaugleistung der Absaugeinrichtung (13, 14, 15) maximiert wird.

8. Verfahren nach einem der Ansprüche 1 bis 7, **dadurch gekennzeichnet, dass** bei einer Sicherheitsabschaltung sämtliche Rotoren (5) gestoppt werden.

9. Verfahren nach einem der Ansprüche 1 bis 8 mit einer einen Stempel (11) umfassenden Mischvorrichtung, **dadurch gekennzeichnet, dass** bei einer Sicherheitsabschaltung der Stempel (11) heruntergefahren wird.

10. Verfahren nach einem der Ansprüche 1 bis 9 mit einer Mischvorrichtung, welche einen eine Fütteröffhung (9a) aufweisenden Schacht (9) umfasst, **dadurch gekennzeichnet, dass** bei einer Sicherheitsabschaltung die Fütteröffhung (9a) verschlossen und vorzugsweise verriegelt wird.

11. Verfahren nach einem der Ansprüche 1 bis 10 mit einer Mischvorrichtung, welche ein Ausformaggregat (3) umfasst, **dadurch gekennzeichnet, dass** bei einer Sicherheitsabschaltung das Ausformaggregat (3) angehalten wird.

12. Verfahren nach einem der Ansprüche 1 bis 11, **dadurch gekennzeichnet, dass** beim Überschreiten des Regelgrenzwertes und/oder beim Überschreiten des Sicherheitsgrenzwertes in die Absaugeinrichtung (13, 14, 15) Luft, Kohlenstoffdioxid und/oder Stickstoff eingeströmt wird bzw. werden.

13. Verfahren nach einem der Ansprüche 1 bis 12, **dadurch gekennzeichnet, dass** beim Überschreiten des Regelgrenzwertes und/oder beim Überschreiten des Sicherheitsgrenzwertes in die Absaugeinrichtung (13, 14, 15) Wasser eingesprüht wird.

14. Verfahren nach einem der Ansprüche 1 bis 13, **dadurch gekennzeichnet, dass** die Konzentration an organischen Verbindungen im angesaugten Gasgemisch mittels eines Flammenionisationsdetektors, eins Wärmetönungssensors, eins Halbleiterdetektors, eins Photoionisationsdetektors oder eines Infrarotdetektors gemessen werden.

15. Verfahren nach einem der Ansprüche 1 bis 14, **dadurch gekennzeichnet, dass** mittels eines in der Absaugeinrichtung (13, 14, 15) angeordneten Volumenstrommessgerätes der Volumenstrom der angesaugten Luft gemessen wird, wobei der Volumenstrom in die Regelung der/des Verfahrensparameter(s), insbesondere der Absaugleistung der Absaugeinrichtung (13, 14, 15), einfließt.

## Claims

1. Process for producing a rubber mixture in a mixing apparatus having at least one mixing chamber (4, 4') in which rotors (5) are disposed, where a plant control system by means of which process parameters especially including the speed of the rotors (5), the suction output of a suction device (13, 14, 15) and the mixing time are controlled by open- or closed-loop control is provided,
where at least one rubber is mixed in the mixing chamber (4, 4') with at least one filler, especially silica, preferably with addition of at least one coupling agent, especially a silane, and
where the gas mixture present in and above the mixing chamber (4, 4') is sucked out by means of the suction device (13, 14, 15),
**characterizedin tha**t volatile organic compounds, especially alcoholic gases, present in the gas mixture sucked in are detected continuously in the suction device (13, 14, 15), where, in the event of exceedance of a concentration of organic compounds in the gas mixture sucked in that has been defined as the control limit, the concentration measured is employed as control variable in the plant control system for closed-loop control of at least one of the process parameters, where, in the event of exceedance of a concentration of organic compounds in the gas mixture sucked in that has been defined as the safety limit, there is a safety shutdown of the mixing apparatus by means of the plant control system.

2. Process according to Claim 1, **characterized in that** one process parameter which is controlled is the suction output of the suction device (13, 14, 15).

3. Process according to Claim 1 or 2, **characterized in that** the volume flow rate of the suction device (13, 14, 15) is controlled by means of at least one electronically actuatable flap that can be inserted into a waste air pipe (16) of the suction device (13, 14, 15).

4. Process according to any of Claims 1 to 3, **characterized in that** one process parameter which is controlled is the mixing time.

5. Process according to any of Claims 1 to 4, **characterized in that** one process parameter which is controlled is the speed of the rotors (5) present in the mixing chamber (4, 4').

6. Process according to Claim 5, **characterized in that** the speed of the rotors (5) present in the mixing chamber (4, 4') is reduced on exceedance of the control limit, especially with brief stoppage of the rotors (5).

7. Process according to any of Claims 1 to 6, **characterized in that** the suction output of the suction device (13, 14, 15) is maximized in the event of a safety shutdown.

8. Process according to any of Claims 1 to 7, **characterized in that** all rotors (5) are stopped in the event of a safety shutdown.

9. Process according to any of Claims 1 to 8 having a mixing apparatus comprising a ram (11), **characterized in that** the ram (11) is lowered in the event of a safety shutdown.

10. Process according to any of Claims 1 to 9 having a mixing apparatus comprising a shaft (9) having a feed opening (9a), **characterized in that** the feed opening (9a) is closed and preferably locked in the event of a safety shutdown.

11. Process according to any of Claims 1 to 10 having a mixing apparatus comprising a shaping unit (3), **characterized in that** the shaping unit (3) is stopped in the event of a safety shutdown.

12. Process according to any of Claims 1 to 11, **characterized in that** air, carbon dioxide and/or nitrogen is/are introduced into the suction device (13, 14, 15) on exceedance of the control limit and/or on exceedance of the safety limit.

13. Process according to any of Claims 1 to 12, **characterized in that** water is sprayed into the suction device (13, 14, 15) on exceedance of the control limit and/or on exceedance of the safety limit.

14. Process according to any of Claims 1 to 13, **characterized in that** the concentration of organic compounds in the gas mixture that has been sucked in is measured by means of a flame ionization detector, an exothermicity sensor, a semiconductor detector, a photoionization detector or an infrared detector.

15. Process according to any of Claims 1 to 14, **characterized in that** the volume flow rate of the air sucked in is measured by means of a volume flow meter disposed in the suction device (13, 14, 15), where the volume flow rate is an input variable in the control of the process parameter(s), especially of the suction output of the suction device (13, 14, 15) .

## Revendications

1. Procédé de fabrication d'un mélange de caoutchouc dans un dispositif de mélange muni d'au moins une chambre de mélange (4, 4'), dans laquelle des rotors (5) sont agencés,
une commande d'installation étant prévue, au moyen de laquelle des paramètres de procédé, qui comprennent notamment la vitesse de rotation des rotors (5), la puissance d'aspiration d'un appareil d'aspiration (13, 14, 15) et le temps de mélange, sont commandés ou régulés,
au moins un caoutchouc étant mélangé avec au moins une charge, notamment de l'acide silique, dans la chambre de mélange (4, 4'), de préférence avec ajout d'au moins un agent de couplage, notamment d'un silane, et
le mélange gazeux se trouvant dans et au-dessus de la chambre de mélange (4, 4') étant aspiré au moyen de l'appareil d'aspiration (13, 14, 15),
**caractérisé en ce que**
des composés organiques volatils se trouvant dans le mélange gazeux aspiré, notamment des gaz alcooliques, sont détectés en continu dans l'appareil d'aspiration (13, 14, 15) ; lorsqu'une concentration en composés organiques définie comme valeur limite de régulation est dépassée dans le mélange gazeux aspiré, la concentration mesurée étant utilisée dans la commande d'installation comme grandeur de régulation pour la régulation d'au moins un des paramètres de procédé ; lorsqu'une concentration en composés organiques définie comme valeur limite de sécurité est dépassée dans le mélange gazeux aspiré, une coupure de sécurité du dispositif de mélange ayant lieu au moyen de la commande d'installation.

2. Procédé selon la revendication 1, **caractérisé en ce qu'**un paramètre de procédé qui est régulé est la puissance d'aspiration de l'appareil d'aspiration (13, 14, 15).

3. Procédé selon la revendication 1 ou 2, **caractérisé en ce que** le débit volumique de l'appareil d'aspiration (13, 14, 15) est régulé au moyen d'au moins un clapet commandable électroniquement, escamotable dans un tuyau d'échappement (16) de l'appareil d'aspiration (13, 14, 15) .

4. Procédé selon l'une quelconque des revendications 1 à 3, **caractérisé en ce qu'**un paramètre de procédé qui est régulé est le temps de mélange.

5. Procédé selon l'une quelconque des revendications 1 à 4, **caractérisé en ce qu'**un paramètre de procédé qui est régulé est la vitesse de rotation des rotors (5) se trouvant dans la chambre de mélange (4, 4').

6. Procédé selon la revendication 5, **caractérisé en ce que** la vitesse de rotation des rotors (5) se trouvant dans la chambre de mélange (4, 4') est réduite lorsque la valeur limite de régulation est dépassée, les rotos (5) étant notamment brièvement arrêtés.

7. Procédé selon l'une quelconque des revendications 1 à 6, **caractérisé en ce que** la puissance d'aspiration de l'appareil d'aspiration (13, 14, 15) est maximisée lors d'une coupure de sécurité.

8. Procédé selon l'une quelconque des revendications 1 à 7, **caractérisé en ce que** tous les rotors (5) sont stoppés lors d'une coupure de sécurité.

9. Procédé selon l'une quelconque des revendications 1 à 8 avec un dispositif de mélange comprenant un piston (11), **caractérisé en ce que** le piston (11) est descendu lors d'une coupure de sécurité.

10. Procédé selon l'une quelconque des revendications 1 à 9 avec un dispositif de mélange qui comprend un puits (9) comprenant une ouverture d'alimentation (9a), **caractérisé en ce que** l'ouverture d'alimentation (9a) est fermée et de préférence verrouillée lors d'une coupure de sécurité.

11. Procédé selon l'une quelconque des revendications 1 à 10 avec un dispositif de mélange qui comprend une unité de façonnage (3), **caractérisé en ce que** l'unité de façonnage (3) est arrêtée lors d'une coupure de sécurité.

12. Procédé selon l'une quelconque des revendications 1 à 11, **caractérisé en ce que**, lorsque la valeur limite de régulation est dépassée et/ou lorsque la valeur limite de sécurité est dépassée, de l'air, du dioxyde de carbone et/ou de l'azote est ou sont introduit(s) dans l'appareil d'aspiration (13, 14, 15).

13. Procédé selon l'une quelconque des revendications 1 à 12, **caractérisé en ce que**, lorsque la valeur limite de régulation est dépassée et/ou lorsque la valeur limite de sécurité est dépassée, de l'eau est injectée dans l'appareil d'aspiration (13, 14, 15).

14. Procédé selon l'une quelconque des revendications 1 à 13, **caractérisé en ce que** la concentration en composés organiques dans le mélange gazeux aspiré est mesurée au moyen d'un détecteur à ionisation de flamme, d'un capteur calorimétrique, d'un détecteur à semiconducteur, d'un détecteur à photoionisation ou d'un détecteur à infrarouge.

15. Procédé selon l'une quelconque des revendications 1 à 14, **caractérisé en ce que** le débit volumique de l'air aspiré est mesuré au moyen d'un appareil de mesure du débit volumique agencé dans l'appareil d'aspiration (13, 14, 15), le débit volumique étant intégré dans la régulation du/des paramètre(s) de procédé, notamment de la puissance d'aspiration de l'appareil d'aspiration (13, 14, 15).
